# EUROPÄISCHE PATENTSCHRIFT

(11) **EP 3 362 204 B1**
(45) Veröffentlichungstag und Bekanntmachung des Hinweises auf die Patenterteilung: **20.11.2019**
(21) Anmeldenummer: 16781724.6
(22) Anmeldetag: 10.10.2016
(51) Int. Cl.: B21K 1/04, B21K 1/76, B21J 9/02, B21K 27/04

(54) **VERFAHREN UND VORRICHTUNG ZUR HERSTELLUNG EINES RINGFÖRMIGEN FORMTEILS**
METHOD AND DEVICE FOR PRODUCING A RING-SHAPED MOULDED PART
PROCÉDÉ ET DISPOSITIF DE FABRICATION D'UNE PIÈCE MOULÉE ANNULAIRE

(30) Priorität: 14.10.2015 CH 14862015
(43) Veröffentlichungstag der Anmeldung: 22.08.2018
(73) Patentinhaber: Hatebur Umformmaschinen AG, 4153 Reinach (CH)
(72) Erfinder: MATT, Andreas, 79730 Murg (DE); STEMMELIN, Patrick, 68480 Moernach (FR); RITTER, Olivier, 68128 Village-Neuf (FR)
(74) Vertreter: Bohest AG
(86) Internationale Anmeldenummer: PCT/EP2016/074120
(87) Internationale Veröffentlichungsnummer: WO 2017/063965

(56) Entgegenhaltungen:
- JP-A- H05 277 615
- JP-A- H11 244 982
- US-A- 6 065 322

## Beschreibung

Die Erfindung betrifft ein Verfahren und eine Vorrichtung zur Herstellung eines ringförmigen Formteils gemäss dem Oberbegriff des Patentanspruchs 1 bzw. dem Oberbegriff des Patentanspruchs 9.

Ein bekanntes Verfahren zur Herstellung von Wälzlagerringen besteht darin, in einer Umformvorrichtung mittels Warmumformung zunächst ein Paar von Ringen herzustellen, von denen der eine den Innenring und der andere den Aussenring eines Wälzlagers bildet. Einer oder beide der Ringe wird bzw. werden um ein bestimmtes Mass aufgeweitet, beispielsweise um Platz für die zwischen den Ringen anzuordnenden Kugeln oder Walzen zu schaffen.

Das Aufweiten der Ringe erfolgt dabei meist ausserhalb der Umformvorrichtung in separaten Vorrichtungen, beispielsweise einer Ringwalzvorrichtung oder durch eine Kalt-Kalibrierung. Diese Art der Ringaufweitung erfordert neben zusätzlicher Vorrichtungen auch noch Schnittstellen zwischen den beteiligten Vorrichtungen und bedingt einen höheren Handling-Aufwand.

Die US 6 065 322 A offenbart demgegenüber Verfahren und Vorrichtungen, bei denen ein in der Umformvorrichtung geformter Ring in einer Aufweitungsstufe der Umformvorrichtung mittels einer Matrize und mittels mindestens eines Aufweitungsstempels auf die Querschnittsabmessungen des herzustellenden Formteils aufgeweitet wird, wobei der Ring in der Matrize angeordnet wird und der Aufweitungsstempel in einem Schritt in axialer Richtung in den Ring eingepresst wird und den Ring dabei aufweitet. Dabei kann es zu hohen Materialbelastungen kommen, die unter Umständen zu Materialschäden führen können.

Vor diesem Hintergrund liegt der Erfindung die Aufgabe zugrunde, ein Verfahren und eine entsprechende Vorrichtung zur Herstellung eines ringförmigen Formteils dahingehend zu verbessern, dass der Aufweitungsprozess innerhalb der Umformvorrichtung unter Vermeidung zu hoher Materialbelastungen erfolgt.

Diese Aufgabe wird durch das erfindungsgemässe Verfahren und die erfindungsgemässe Vorrichtung gelöst, wie es bzw. sie im unabhängigen Patentanspruch 1 bzw. im unabhängigen Patentanspruch 9 definiert ist. Besonders vorteilhafte Weiterbildungen und Ausgestaltungen der Erfindung ergeben sich aus den jeweils abhängigen Patentansprüchen.

Hinsichtlich des Verfahrens besteht das Wesen der Erfindung im Folgenden: Bei einem Verfahren zur Herstellung eines ringförmigen Formteils wird mittels einer Umformvorrichtung aus einem Rohling ein Ring kleinerer Querschnittsabmessungen als das herzustellende Formteil geformt und dieser Ring danach in einer Aufweitungsstufe der Umformvorrichtung mittels mindestens einer Matrize und mittels mindestens eines Aufweitungsstempels auf die Querschnittsabmessungen des herzustellenden Formteils aufgeweitet, wobei der Ring in der Matrize angeordnet wird und der Aufweitungsstempel in axialer Richtung in den Ring eingepresst wird und den Ring dabei aufweitet. Erfindungsgemäss erfolgt die Aufweitung des Rings in zwei oder mehreren Schritten.

Dadurch, dass die Aufweitung in einer entsprechend ausgebildeten Umform- bzw. Aufweitungsstufe innerhalb der Umformvorrichtung vorgenommen wird, ist es möglich, innerhalb der Umformvorrichtung nahezu fertige Formteile (aufgeweitete Ringe) herzustellen. Die sonst üblichen vorrichtungsexternen Bearbeitungsschritte für die Aufweitung entfallen vollständig. Dadurch, dass die Aufweitung des Rings in zwei oder mehreren Schritten erfolgt, können zu hohe Materialbelastungen und allenfalls daraus resultierende Materialschäden vermieden werden.

Vorteilhaft ist, dass durch die Aufweitung die Länge des Formteils höchstens unwesentlich geändert wird.

Zweckmässigerweise wird ein Aufweitungsstempel eingesetzt, der mindestens zwei Abschnitte unterschiedlicher Querschnittsabmessungen und zwischen je zwei solchen Abschnitten jeweils einen Übergangsabschnitt aufweist. Mit einem so ausgebildeten Aufweitungsstempel lässt sich der Aufweitungsprozess relativ einfach durchführen.

Vorteilhafterweise kann der Aufweitungsstempel Freistellungen oder Winkel aufweisen, insbesondere um Reibung zu reduzieren,

Zweckmässigerweise wird eine Matrize mit einer Matrizenkammer zur Aufnahme des Rings eingesetzt, wobei die Querschnittsabmessungen der Matrizenkammer mit den äusseren Querschnittsabmessungen des herzustellenden Formteils übereinstimmen. Dies garantiert die Masshaltigkeit des herzustellenden Formteils.

Vorteilhafterweise erfolgt die Aufweitung des Rings mittels zwei oder mehrerer unterschiedlich dimensionierter Matrizen und entsprechend zwei oder mehrerer unterschiedlich dimensionierter Aufweitungsstempel. Dies erlaubt eine optimale Anpassung an die jeweiligen Materialien.

Alternativ kann die Aufweitung des Rings auch mittels eines in seinen Querschnittsabmessungen zwei- oder mehrfach abgestuften Aufweitungsstempels erfolgen.

Vorteilhafterweise erfolgt im Anschluss an die Aufweitung eine Prägung, wobei der aufgeweitete Ring in der Matrize mittels eines Abschnitts des Aufweitungsstempels oder eines separaten Prägestempels, eventuell in einer weiteren Umformstufe, in axialer Richtung mit Druck beaufschlagt wird. Der Prägeschritt sorgt für eine lückenlose Füllung der Matrizenkammer, wodurch die Masshaltigkeit des fertig aufgeweiteten Rings bzw. herzustellenden Formteils weiter verbessert wird. Ausserdem werden die Stirnflächen des Rings bzw. herzustellenden Formteils egalisiert, so dass fehlerfreie gerade Stirnflächen erhalten werden.

Vorteilhafterweise ist das herzustellende Formteil ein Wälzlagerring. Die Umformung des Rohlings zum Ring erfolgt dabei vorteilhafterweise durch Warmumformung bei Temperaturen ab 700°C.

Hinsichtlich der Vorrichtung besteht das Wesen der Erfindung in Folgendem: Eine Vorrichtung zur Herstellung eines ringförmigen Formteils umfasst eine Umformvorrichtung mit Umformstufen, welche dazu ausgebildet sind, aus einem Rohling einen Ring zu formen. Die Umformvorrichtung umfasst eine Aufweitungsstufe, welche mindestens eine Matrize zur Aufnahme des Rings und mindestens einen Aufweitungsstempel aufweist, der axial in den in der Matrize befindlichen Ring einpressbar ist, wobei der Ring in der Matrize vom Aufweitungsstempel aufweitbar ist. Erfindungsgemäss ist die Aufweitungsstufe dazu ausgebildet, die Aufweitung des Rings in zwei oder mehreren Schritten durchzuführen.

Vorteilhafterweise weist der Aufweitungsstempel mindestens zwei Abschnitte unterschiedlicher Querschnittsabmessungen und zwischen je zwei solchen Abschnitten jeweils einen Übergangsabschnitt auf.

Vorteilhafterweise weist die Aufweitungsstufe zwei oder mehrere unterschiedlich dimensionierte Matrizen und entsprechend zwei oder mehrere unterschiedlich dimensionierte Aufweitungsstempel auf.

Im Falle zweier oder mehrerer Matrizen ist die Aufweitungsstufe in dem Sinne zu verstehen, dass sie zwei bzw. mehrere Teil-Aufweitungsstufen mit je einer Matrize und einem zugeordneten Aufweitungsstempel umfasst.

Im Folgenden wird die Erfindung anhand von in der Zeichnung dargestellten Ausführungsbeispielen detaillierter beschrieben. Es zeigen:
- Fig. 1 -: eine blockschematische Darstellung eines Ausführungsbeispiels einer erfindungsgemässen Umformvorrichtung;
- Fig. 2-4 -: eine Variante einer Aufweitungsstufe in verschiedenen Betriebsphasen;
- Fig. 5-7 -: eine erste erfindungsgemässe Variante einer Aufweitungsstufe der Umformvorrichtung in verschiedenen Betriebsphasen;
- Fig. 8-12 -: eine weitere Variante einer Aufweitungsstufe in verschiedenen Betriebsphasen;
- Fig. 13-17 -: eine zweite erfindungsgemässe Variante einer Aufweitungsstufe der Umformvorrichtung in verschiedenen Betriebsphasen;
- Fig. 18-23 -: eine dritte erfindungsgemässe Variante einer Aufweitungsstufe der Umformvorrichtung in verschiedenen Betriebsphasen und
- Fig. 24-27 -: eine weitere Variante einer Aufweitungsstufe in verschiedenen Betriebsphasen.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

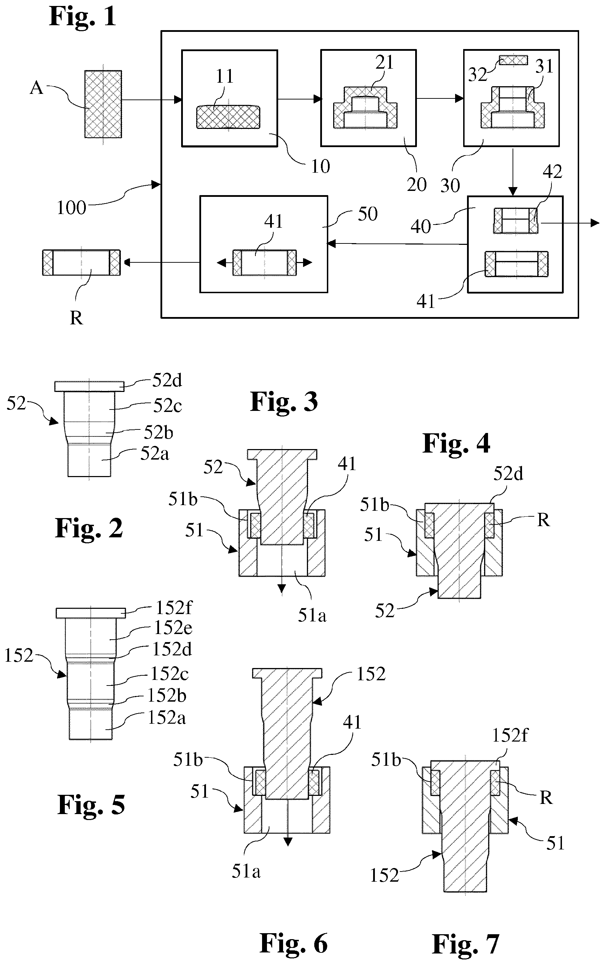

Die schematische Übersichtsdarstellung der Fig. 1 zeigt die für das Verständnis der vorliegenden Erfindung relevanten Funktionsblöcke bzw. Stufen der erfindungsgemässen Umformvorrichtung. Die als Ganze mit 100 bezeichnete Umformvorrichtung umfasst vier Umformstufen 10, 20, 30 und 40 und eine Aufweitungsstufe 50, die mehrere Teil-Aufweitungsstufen umfassen kann. In der ersten Umformstufe 10 wird ein Rohling A, z.B. ein Abschnitt eines Stangenmaterials, zugeführt und zu einem scheibenförmigen Werkstück 11 umgeformt. In der zweiten Umformstufe 20 wird das scheibenförmige Werkstück in ein im Wesentlichen becherförmiges Werkstück 21 umgeformt. In der dritten Umformstufe 30 wird aus dem becherförmigen Werkstück eine Scheibe 32 herausgestanzt, so dass ein ringförmiges Werkstück 31 mit abgestuften Innen- und Aussendurchmessern entsteht. In der vierten Umformstufe 40 wird das abgestuft ringförmige Werkstück in ein Paar von Ringen 41 und 42 getrennt, wobei der Innendurchmesser des grösseren Rings 41 dem Aussendurchmesser des kleineren Rings 42 entspricht. Der kleinere Ring 42 ist bereits fertig ausgebildet und wird aus der Umformvorrichtung abgeführt. Der grössere Ring 41 wird in der Aufweitungsstufe 50 noch aufgeweitet, so dass sein Innendurchmesser schliesslich um ein gewünschtes Mass grösser ist als der Aussendurchmesser des kleineren Rings 42. Der fertig aufgeweitete Ring stellt das herzustellende Formteil dar und ist mit R bezeichnet.

Die Herstellung des Ringpaars 41 und 42 aus einem Materialabschnitt A in verschiedenen Umformstufen einer Umformvorrichtung entspricht dem Stand der Technik und bedarf deshalb keiner weiteren Erläuterung. Die Erfindung betrifft in erster Linie die Art und Weise der Aufweitung des Rings 41 zum fertigen Formteil R und die dafür erforderliche Ausbildung der Aufweitungsstufe 50 der Umformvorrichtung. Im Folgenden ist dies anhand verschiedener beispielsweiser Varianten im Detail beschrieben.

Ein wesentlicher Teil der Erfindung besteht darin, dass die Aufweitung des Rings 41 noch innerhalb der Umformvorrichtung 100 in der dafür vorgesehenen speziellen Aufweitungsstufe 50 erfolgt, und zwar mittels einer Matrize und eines Aufweitungsstempels, wobei der aufzuweitende Ring 41 in die Matrize eingebracht wird und der Aufweitungsstempel axial durch den Ring hindurchgepresst wird und dabei den Ring aufweitet. Dadurch, dass diese Aufweitung in einer entsprechend ausgebildeten Umform- bzw. Aufweitungsstufe innerhalb der Umformvorrichtung vorgenommen wird, ist es möglich, innerhalb der Umformvorrichtung nahezu fertige Formteile (aufgeweitete Ringe) herzustellen. Die sonst üblichen vorrichtungsexternen Bearbeitungsschritte für die Aufweitung entfallen vollständig.

Die Figuren 2 bis 4 illustrieren die einfachste Variante einer Aufweitung mit einem Aufweitungsstempel 52. Eine ringförmige Matrize 51 umfasst eine axiale Durchgangsöffnung 51a und eine Matrizenkammer 51b, deren Durchmesser etwas grösser ist als der Aussendurchmesser des Rings 41 und dem gewünschten Aussendurchmesser des fertig aufgeweiteten Rings bzw. herzustellenden Formteils entspricht. Die in axialer Richtung gemessene Höhe der Matrizenkammer ist etwas grösser als das entsprechende Mass des aufzuweitenden Rings 41. Der Durchmesser der Durchgangsöffnung 51a entspricht dem gewünschten Innendurchmesser des fertig aufgeweiteten Rings. Der als Ganzer mit 52 bezeichnete Aufweitungsstempel umfasst einen ersten zylindrischen Abschnitt 52a, einen konischen Abschnitt 52b, einen zweiten zylindrischen Abschnitt 52c und einen dritten zylindrischen Abschnitt 52d. Der Durchmesser des ersten zylindrischen Abschnitts 52a ist etwas kleiner als der Innendurchmesser des aufzuweitenden Rings 41. Der Durchmesser des zweiten zylindrischen Abschnitts 52c entspricht dem gewünschten Innendurchmesser des fertig aufgeweiteten Rings. Der Durchmesser des dritten zylindrischen Abschnitts 52d ist etwas kleiner als der Durchmesser der Matrizenkammer 51b. Die zylindrischen Abschnitte 52a und 52c stellen Abschnitte konstanter Querschnittsabmessungen dar, der konische Abschnitt bildet einen Übergangsabschnitt zwischen den beiden Abschnitten konstanter Querschnittsabmessungen.

Die Fig. 3 zeigt die Matrize 51 mit dem in die Matrizenkammer 51b eingelegten aufzuweitenden Ring 41 und den Aufweitungsstempel 52 in einer Stellung, in welcher erst der erste zylindrische Abschnitt 52a in den Ring 41 eingeführt ist. Mittels eines nicht dargestellten, typischerweise mechanischen Antriebs wird dann der Aufweitungsstempel 52 (in axialer Richtung) vollständig in den Ring 41 hineingepresst, bis er schliesslich die in Fig. 4 gezeigte Stellung einnimmt. Der Ring 41 wird dabei bis zu seiner endgültigen Form aufgeweitet. Der fertig aufgeweitete Ring ist in Fig. 4 mit R bezeichnet. Der dritte zylindrische Abschnitt 52d des Aufweitungsstempels 52 presst mit seiner ringförmigen Stirnseite auf den aufgeweiteten Ring R und sorgt für eine lückenlose Füllung der Matrizenkammer 51b, wodurch die Masshaltigkeit des fertig aufgeweiteten Rings R erreicht wird. Dieser Vorgang ist hier und nachstehend als Prägen bezeichnet.

Eine Aufweitung in einem Schritt mit einem solchen Aufweitungsstempel 52 alleine kann zu hohen Materialbelastungen führen und ist daher in vielen Fällen nicht ideal. Erfindungsgemäss wird die Aufweitung daher in zwei oder mehreren Schritten vorgenommen, wie nachfolgend beschrieben.

Des Weiteren ist noch anzufügen, dass im Rahmen der Beschreibung der dargestellten Ausführungsformen der Anschaulichkeit halber von dem in der Praxis häufigsten Fall ausgegangen wird, dass die herzustellenden Ringe kreisförmige Querschnitte aufweisen. Demzufolge sind die Querschnittsabmessungen der Ringe, der Matrize und des Aufweitungsstempels durch Innen- und Aussendurchmesser gegeben. Aufweitung bedeutet demzufolge eine Vergrösserung der Innen- und Aussendurchmesser. Die Erfindung ist aber nicht auf die Herstellung von Ringen mit kreisförmigen Querschnitten beschränkt. Im Falle anderer Querschnittsformen (z.B. dreieckig oder polygonal) treten sinngemäss innere und äussere Querschnittsabmessungen an die Stelle von Innen- und Aussendurchmessern. Aufweitung bedeutet in diesem Fall eine Vergrösserung der inneren und äusseren Querschnittsabmessungen. Selbstverständlich weisen dann auch die Matrize und der Aufweitungsstempel entsprechend angepasste innere und äussere Querschnittsabmessungen auf. Die Querschnittsabmessungen der Matrize beziehen sich nur auf den Wirkquerschnitt, Einführphasen oder Freistellungen können jedoch vorhanden sein.

Die Figuren 5 bis 7 illustrieren eine Verfahrensvariante, bei welcher die Aufweitung des Rings 41 in zwei Schritten erfolgt. Die Matrize 51 ist gleich ausgebildet wie bei der Variante der Figuren 2 bis 4. Ein Aufweitungsstempel 152 ist mehrfach abgestuft und weist einen ersten zylindrischen Abschnitt 152a, einen ersten konischen Abschnitt 152b, einen zweiten zylindrischen Abschnitt 152c, einen zweiten konischen Abschnitt 152d, einen dritten zylindrischen Abschnitt 152e und einen vierten zylindrischen Abschnitt 152f auf. Der Durchmesser des ersten zylindrischen Abschnitts 152a ist etwas kleiner als der Innendurchmesser des aufzuweitenden Rings 41. Der Durchmesser des dritten zylindrischen Abschnitts 152e entspricht dem gewünschten Innendurchmesser des fertig aufgeweiteten Rings. Der Durchmesser des zweiten zylindrischen Abschnitts 152c ist grösser als der des ersten zylindrischen Abschnitts 152a und kleiner als der des dritten zylindrischen Abschnitts 152e. Der Durchmesser des vierten zylindrischen Abschnitts 152f ist etwas kleiner als der Durchmesser der Matrizenkammer 51b. Die zylindrischen Abschnitte 152a, 152c und 152e stellen Abschnitte konstanter Querschnittsabmessungen sowie gegebenenfalls notwendiger Freistellungen dar, die konischen Abschnitte 152b und 152d bilden je einen Übergangsabschnitt zwischen den Abschnitten konstanter Querschnittsabmessungen.

Die Fig. 6 zeigt die Matrize 51 mit dem in die Matrizenkammer 51b eingelegten aufzuweitenden Ring 41 und den Aufweitungsstempel 152 in einer Stellung, in welcher erst der erste zylindrische Abschnitt 152a in den Ring 41 eingeführt ist. Mittels eines nicht dargestellten, typischerweise mechanischen Antriebs wird dann der Aufweitungsstempel 152 vollständig in den Ring 41 hineingepresst, bis er schliesslich die in Fig. 7 gezeigte Stellung einnimmt. Der Ring 41 wird dabei bis zu seiner endgültigen Form aufgeweitet. Der fertig aufgeweitete Ring ist in Fig. 7 wieder mit R bezeichnet. Der vierte zylindrische Abschnitt 152f des Aufweitungsstempels 152 dient wie vorstehend im Zusammenhang mit dem dritten zylindrischen Abschnitt 52d des Aufweitungsstempels 52 beschrieben der Prägung des aufgeweiteten Rings R.

Selbstverständlich kann die Aufweitung auch in mehr als zwei Schritten erfolgen, wobei dann ein Aufweitungsstempel mit entsprechend mehr abgestuften zylindrischen Abschnitten eingesetzt würde. In allen Fällen können die Aufweitungsstempel Einführphasen und Freistellungen aufweisen.

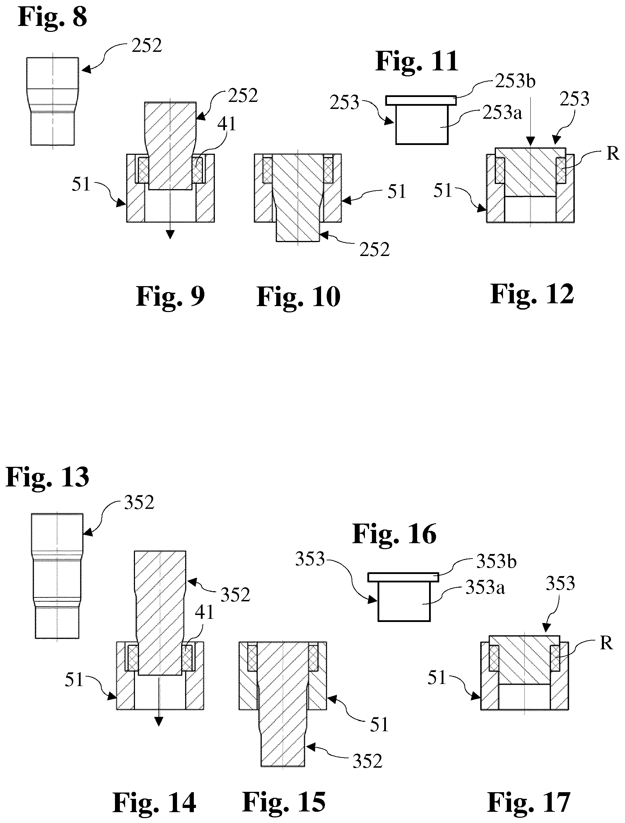

Bei der beschriebenen Ausführungsvariante der Figuren 5 bis 7 erfolgt das Aufweiten und das Prägen mit ein und demselben Werkzeug, nämlich dem Aufweitungsstempel 152. In den Figuren 8 bis 12 und den Figuren 13 bis 17 sind zwei Verfahrensvarianten dargestellt, bei denen die Aufweitung mit einem ersten Werkzeug und das Prägen mit einem separaten zweiten Werkzeug erfolgen.

Die Variante der Figuren 8 bis 12 entspricht im Prinzip der Variante der Figuren 2 bis 4 mit dem Unterschied, dass hier ein Aufweitungsstempel 252 (Fig. 8) eingesetzt ist, der weitestgehend gleich wie der Aufweitungsstempel 52 (Fig. 2) ausgebildet ist, dem aber der dritte zylindrische Abschnitt 52d des Aufweitungsstempels 52 fehlt. Die Figuren 9 und 10 zeigen, wie der Aufweitungsstempel 252 in den aufzuweitenden Ring 41 eingepresst wird. Nach dem Aufweitungsvorgang wird der Aufweitungsstempel 252 entfernt und die Prägung des aufgeweiteten Rings R mittels eines eigenen Prägestempels 253 vorgenommen ((Figuren 11 und 12). Der Prägestempel 253 umfasst einen ersten zylindrischen Abschnitt 253a und einen zweiten zylindrischen Abschnitt 253b. Die beiden Abschnitte 253 a und 253b entsprechen den zylindrischen Abschnitten 52c und 52d des Aufweitungsstempels 52 der Fig. 2.

Die erfindungsgemässe Ausführungsvariante der Figuren 13 bis 17 entspricht im Prinzip der Variante der Figuren 5 bis 7 mit dem Unterschied, dass hier ein Aufweitungsstempel 352 (Fig. 13) eingesetzt ist, der weitestgehend gleich wie der mehrstufige Aufweitungsstempel 152 (Fig. 5) ausgebildet ist, dem aber der vierte zylindrische Abschnitt 152f des Aufweitungsstempels 152 fehlt. Die Figuren 14 und 15 zeigen, wie der Aufweitungsstempel 352 in den aufzuweitenden Ring 41 eingepresst wird. Nach dem Aufweitungsvorgang wird der Aufweitungsstempel 352 entfernt und die Prägung des aufgeweiteten Rings R mittels eines eigenen Prägestempels 353 vorgenommen (Figuren 16 und 17). Der Prägestempel 353 umfasst einen ersten zylindrischen Abschnitt 353a und einen zweiten zylindrischen Abschnitt 353b. Die beiden Abschnitte 353a und 353b entsprechen den zylindrischen Abschnitten 152e und 152f des Ausweitungsstempels 152 der Fig. 5. Gegenüber der Variante der Figuren 8 bis 12 unterscheidet sich diese erfindungsgemässe Variante durch den Einsatz eines mehrfach abgestuften Ausweitungsstempels 352.

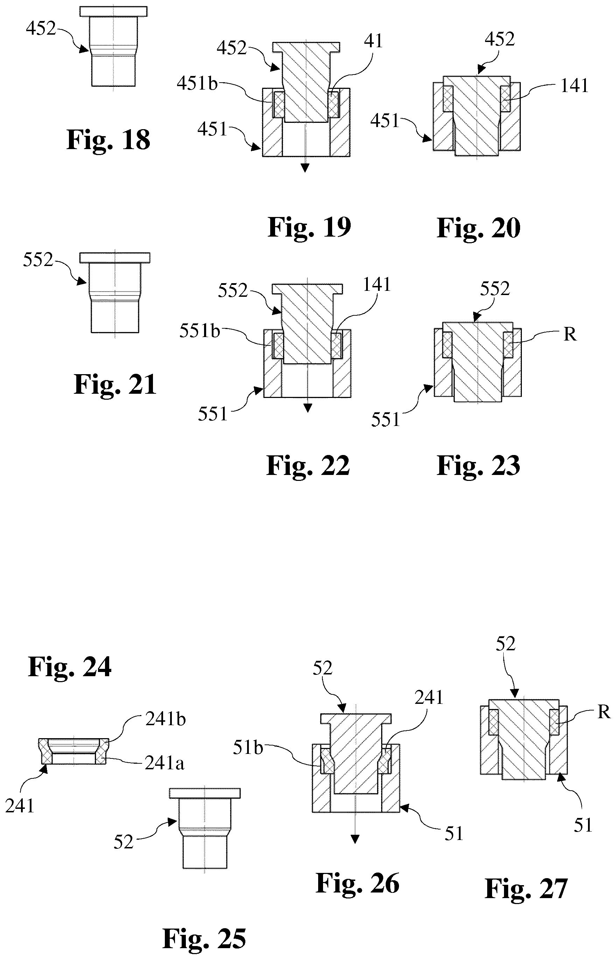

In den Figuren 18 bis 23 ist eine weitere erfindungsgemässe Verfahrensvariante dargestellt, bei der die Aufweitung des Rings 41 in zwei aufeinanderfolgenden Schritten oder Phasen durchgeführt wird. Jede der beiden ablaufmässig gleichen Phasen entspricht der in den Figuren 2 bis 4 dargestellten Verfahrensvariante unter Einsatz der dort beschriebenen Umformwerkzeuge (Matrizen und Aufweitungsstempel), wobei aber die Matrizen und die Aufweitungsstempel in den beiden Phasen unterschiedlich dimensioniert sind. In der ersten Phase (Figuren 18 bis 20) werden eine erste Matrize 451 und ein erster Aufweitungsstempel 452 eingesetzt. Die erste Matrize 451 weist eine erste Matrizenkammer 451b auf, deren Durchmesser kleiner ist als der gewünschte Aussendurchmesser des fertig aufgeweiteten Rings. Entsprechend ist auch der Aufweitungsstempel 452 in seinen Durchmessern etwas kleiner bemessen. In dieser Phase wird also aus dem Ring 41 zunächst ein Ring 141 erzeugt, der noch nicht die gewünschten Masse des fertig aufgeweiteten Rings aufweist. In der zweiten Phase (Figuren 21 bis 23) werden eine zweite Matrize 551 und ein zweiter Aufweitungsstempel 552 eingesetzt. Die zweite Matrize 451 weist eine zweite Matrizenkammer 551b auf, deren Durchmesser dem gewünschten Aussendurchmesser des fertig aufgeweiteten Rings entspricht. Entsprechend ist auch der Aufweitungsstempel 452 in seinen Durchmessern etwas grösser bemessen. In dieser Phase wird der Ring 141 auf die gewünschten Abmessungen des fertigen Rings R aufgeweitet und geprägt.

Vorrichtungsmässig ist diese Variante so realisiert, dass die Aufweitungsstufe zwei Teil-Aufweitungsstufen mit je einer Matrize 451 bzw. 551 und je einem zugeordneten Aufweitungsstempel 452 bzw. 552 umfasst.

Die Figuren 24 bis 27 veranschaulichen eine weitere Verfahrensvariante, die weitestgehend der Variante der Figuren 2 bis 4 entspricht, bei der jedoch anstelle des zylindrischen Rings 41 von einem Ring 241 ausgegangen wird, der zwei Abschnitte 241a und 241b unterschiedlicher Aussen- und Innendurchmesser aufweist (Fig. 24). Die Herstellung dieses Rings 241 erfolgt wieder in an sich bekannter Weise in den Umformstufen 10-40 der Umformeinrichtung 100.

Der im Durchmesser grössere Abschnitt 241b des Rings 241 hat bereits die Masse des fertig aufgeweiteten Rings. Somit muss nur noch der im Durchmesser kleinere Abschnitt 241a des Rings 241 sowie der Übergangsbereich zum grösseren Abschnitt 241b aufgeweitet werden. Fig. 26 zeigt, wie der Aufweitungsstempel 52 in den Ring 241 eingeführt wird, und Fig. 27 zeigt den Aufweitungsstempel 52 im voll in die Matrize 51 eingeführten Zustand, wobei gleichzeitig auch wieder die Prägung des fertig aufgeweiteten Rings R stattfindet.

Das vorstehend beschriebene erfindungsgemässe Verfahren und die entsprechende erfindungsgemässe Vorrichtung sind insbesondere für die Herstellung von Wälzlagerringen aus Wälzlagerstahl geeignet. Die Umformung in den einzelnen Umformstufen erfolgt dabei in Warmumformprozessen in einem Temperaturbereich ab etwa 700°C. Durch die Integration des Aufweitungsvorgangs direkt in die Umformvorrichtung kann die während des Umformprozesses aufgenommene Wärmeenergie für die Aufweitung genützt werden. Je nach Werkstoff kann die Umformung und speziell die Aufweitung auch im kalten Zustand erfolgen.

## Patentansprüche

1. Verfahren zur Herstellung eines ringförmigen Formteils (R), bei dem mittels einer Umformvorrichtung (100) aus einem Rohling (A) ein Ring (41; 241) kleinerer Querschnittsabmessungen als das herzustellende Formteil (R) geformt wird und dieser Ring (41; 241) danach in einer Aufweitungsstufe (50) der Umformvorrichtung (100) mittels mindestens einer Matrize (51; 451, 551) und mittels mindestens eines Aufweitungsstempels (152; 352; 452, 552) auf die Querschnittsabmessungen des herzustellenden Formteils (R) aufgeweitet wird, wobei der Ring (41; 241) in der Matrize (51; 451, 551) angeordnet wird und der Aufweitungsstempel (152; 352; 452, 552) in axialer Richtung in den Ring eingepresst wird und den Ring dabei aufweitet, **dadurch gekennzeichnet, dass** die Aufweitung des Rings (41) in zwei oder mehreren Schritten erfolgt.

2. Verfahren nach Anspruch 1, **dadurch gekennzeichnet, dass** ein Aufweitungsstempel (152; 352; 452, 552) eingesetzt wird, der mindestens zwei Abschnitte (152a, 152c, 152e) unterschiedlicher Querschnittsabmessungen und zwischen je zwei solchen Abschnitten jeweils einen Übergangsabschnitt (152b, 152d) aufweist.

3. Verfahren nach Anspruch 1 oder 2, **dadurch gekennzeichnet, dass** eine Matrize (51; 551) mit einer Matrizenkammer (51b; 551b) zur Aufnahme des Rings (41; 241) eingesetzt wird, wobei die Querschnittsabmessungen der Matrizenkammer (51b; 551b) mit den äusseren Querschnittsabmessungen des herzustellenden Formteils (R) übereinstimmen.

4. Verfahren nach einem der Ansprüche 1 bis 3, **dadurch gekennzeichnet, dass** die Aufweitung des Rings (41) mittels zwei oder mehrerer unterschiedlich dimensionierter Matrizen (451, 551) und entsprechend zwei oder mehrerer unterschiedlich dimensionierter Aufweitungsstempel (452, 552) erfolgt.

5. Verfahren nach einem der Ansprüche 1 bis 4, **dadurch gekennzeichnet, dass** die Aufweitung des Rings (41) mittels eines in seinen Querschnittsabmessungen zwei- oder mehrfach abgestuften Aufweitungsstempels (152; 352) erfolgt.

6. Verfahren nach einem der Ansprüche 1 bis 5, **dadurch gekennzeichnet, dass** im Anschluss an die Aufweitung eine Prägung erfolgt, wobei der aufgeweitete Ring (141; R) in der Matrize (51; 451, 551) mittels eines Abschnitts (152f) des Aufweitungsstempels (152) oder eines separaten Prägestempels (253; 353) in axialer Richtung mit Druck beaufschlagt wird.

7. Verfahren nach einem der Ansprüche 1 bis 6, **dadurch gekennzeichnet, dass** das herzustellende Formteil (R) ein Wälzlagerring ist.

8. Verfahren nach einem der Ansprüche 1 bis 7, **dadurch gekennzeichnet, dass** die Umformung des Rohlings (A) zum Ring (41; 241) durch Warmumformung bei Temperaturen ab 700°C erfolgt.

9. Vorrichtung zur Herstellung eines ringförmigen Formteils (R) mit einer Umformvorrichtung (100) mit Umformstufen (10, 20, 30, 40), welche dazu ausgebildet sind, aus einem Rohling (A) einen Ring (41; 241) zu formen, und mit einer Aufweitungsstufe (50), welche mindestens eine Matrize (51; 451, 551) zur Aufnahme des Rings (41; 241) und mindestens einen Aufweitungsstempel (152; 352; 452, 552) aufweist, der axial in den in der Matrize befindlichen Ring (41; 241) einpressbar ist, wobei der Ring (41; 241) in der Matrize (51; 451, 551) vom Aufweitungsstempel (152; 352; 452, 552) aufweitbar ist, **dadurch gekennzeichnet, dass** die Aufweitungsstufe (50) dazu ausgebildet ist, die Aufweitung des Rings (41) in zwei oder mehreren Schritten durchzuführen.

10. Vorrichtung nach Anspruch 9, **dadurch gekennzeichnet, dass** der Aufweitungsstempel (152; 352; 452, 552) mindestens zwei Abschnitte (152a, 152c, 152e) unterschiedlicher Querschnittsabmessungen und zwischen je zwei solchen Abschnitten jeweils einen Übergangsabschnitt (152b, 152d) aufweist.

11. Vorrichtung nach Anspruch 9 oder 10, **dadurch gekennzeichnet, dass** die Aufweitungsstufe (50) zwei oder mehrere unterschiedlich dimensionierte Matrizen (451, 551) und entsprechend zwei oder mehrere unterschiedlich dimensionierte Aufweitungsstempel (452, 552) aufweist.

12. Vorrichtung nach einem der Ansprüche 9 bis 11, **dadurch gekennzeichnet, dass** der mindestens eine Aufweitungsstempel (152; 352) zwei- oder mehrfach abgestuft ist.

## Claims

1. Method for producing a ring-shaped formed part (R), in which by means of a forming device (100) a ring (41; 241) of smaller cross-sectional dimensions than the formed part (R) being produced is formed from a blank (A) and then, in an expansion stage (50) of the forming device (100), the resulting ring (41; 241) is expanded to the cross-sectional dimensions of the formed part (R) being produced by means of at least one die (51; 451, 551) and by means of at least one expansion punch (152; 352; 452, 552), wherein the ring (41; 241) is arranged in the die (51; 451, 551) and the expansion punch (152; 352; 452, 552) is pressed into the ring in the axial direction and thereby expands the ring, **characterised in that** the expansion of the ring (41) is effected in two or more steps.

2. Method according to claim 1, **characterised in that** an expansion punch (152; 352; 452, 552) is used which has at least two portions (152a, 152c, 152e) of different cross-sectional dimensions and a transition portion (152b, 152d) between each two such portions.

3. Method according to claim 1 or 2, **characterised in that** a die (51; 551) having a die chamber (51b; 551b) for receiving the ring (41; 241) is used, wherein the cross-sectional dimensions of the die chamber (51b; 551b) correspond to the external cross-sectional dimensions of the formed part (R) being produced.

4. Method according to any one of claims 1 to 3, **characterised in that** the expansion of the ring (41) is effected by means of two or more dies (451, 551) of different dimensions and accordingly by means of two or more expansion punches (452, 552) of different dimensions.

5. Method according to any one of claims 1 to 4, **characterised in that** the expansion of the ring (41) is effected by means of an expansion punch (152; 352) which is doubly or multiply stepped in its cross-sectional dimensions.

6. Method according to any one of claims 1 to 5, **characterised in that** the expansion is followed by a coining step, wherein the expanded ring (141; R) is acted upon in the die (51; 451, 551) by pressure in the axial direction by means of a portion (152f) of the expansion punch (152) or by means of a separate coining punch (253; 353).

7. Method according to any one of claims 1 to 6, **characterised in that** the formed part (R) being produced is a rolling bearing ring.

8. Method according to any one of claims 1 to 7, **characterised in that** the forming of the blank (A) into the ring (41; 241) is effected by hot-forming at temperatures of 700°C and above.

9. Device for producing a ring-shaped formed part (R) using a forming device (100) having forming stages (10, 20, 30, 40) which are configured to form a ring (41; 241) from a blank (A), and having an expansion stage (50) which has at least one die (51; 451, 551) for receiving the ring (41; 241) and at least one expansion punch (152; 352; 452, 552) which is arranged to be pressed axially into the ring (41; 241) located in the die, the ring (41; 241) being expandable in the die (51; 451, 551) by the expansion punch (152; 352; 452, 552), **characterised in that** the expansion stage (50) is configured to carry out the expansion of the ring (41) in two or more steps.

10. Device according to claim 9, **characterised in that** the expansion punch (152; 352; 452, 552) has at least two portions (152a, 152c, 152e) of different cross-sectional dimensions and a transition portion (152b, 152d) between each two such portions.

11. Device according to claim 9 or 10, **characterised in that** the expansion stage (50) has two or more dies (451, 551) of different dimensions and accordingly two or more expansion punches (452, 552) of different dimensions.

12. Device according to any one of claims 9 to 11, **characterised in that** the at least one expansion punch (152; 352) is doubly or multiply stepped.

## Revendications

1. Procédé de fabrication d'une pièce formée annulaire (R), dans lequel, à l'aide d'un dispositif de formage (100), on forme à partir d'une ébauche (A) une bague (41 ; 241) de dimensions en section transversale inférieures à celles de la pièce formée (R) à fabriquer, puis, dans un étage d'évasement (50) du dispositif de formage (100), on fait évaser ladite bague (41 ; 241) aux dimensions en section transversale de la pièce formée à fabriquer (R) au moyen d'au moins une matrice (51 ; 451, 551) et au moyen d'au moins un poinçon d'évasement (152 ; 352 ; 452, 552), en agençant la bague (41 ; 241) dans la matrice (51 ; 451, 551) et en enfonçant le poinçon d'évasement (152 ; 352 ; 452, 552) dans la bague en direction axiale pour évaser la bague, **caractérisé en ce que** l'évasement de la bague (41) s'effectue en deux ou en plusieurs étapes.

2. Procédé selon la revendication 1, **caractérisé en ce qu'** on utilise un poinçon d'évasement (152 ; 352 ; 452, 552) qui présente au moins deux portions (152a, 152c, 152e) de différentes dimensions en section transversale et une portion de transition (152b, 152d) respectivement entre deux de ces portions.

3. Procédé selon la revendication 1 ou 2, **caractérisé en ce qu'**on utilise une matrice (51 ; 551) avec une chambre de matrice (51b ; 551b) pour recevoir la bague (41 ; 241), les dimensions en section transversale de la chambre de matrice (51b ; 551b) coïncidant avec les dimensions extérieures en section transversale de la pièce formée à fabriquer (R).

4. Procédé selon l'une des revendications 1 à 3, **caractérisé en ce que** l'évasement de la bague (41) s'effectue au moyen de deux ou plusieurs matrices (451, 551) de différentes dimensions et en correspondance au moyen de deux ou plusieurs poinçons d'évasement (452, 552) de différentes dimensions.

5. Procédé selon l'une des revendications 1 à 4, **caractérisé en ce que** l'évasement de la bague (41) s'effectue au moyen d'un poinçon d'évasement (152 ; 352) ayant des dimensions en section transversale étagées deux ou plusieurs fois.

6. Procédé selon l'une des revendications 1 à 5, **caractérisé en ce que** l'évasement est suivi par un estampage, la bague évasée (141 ; R) dans la matrice (51 ; 451, 551) étant sollicitée en pression en direction axiale au moyen d'une portion (152f) du poinçon d'évasement (152) ou au moyen d'un poinçon d'estampage séparé (253 ; 353).

7. Procédé selon l'une des revendications 1 à 6, **caractérisé en ce que** la pièce formée à fabriquer (R) est une bague de palier à roulement.

8. Procédé selon l'une des revendications 1 à 7, **caractérisé en ce que** le formage de l'ébauche (A) pour donner la bague (41 ; 241) s'effectue par formage à chaud à des températures à partir de 700 °C.

9. Dispositif de fabrication d'une pièce formée annulaire (R) au moyen d'un dispositif de formage (100) ayant des étages de formage (10, 20, 30, 40) qui sont réalisés pour former une bague (41 ; 241) à partir d'une ébauche (A), et ayant un étage d'évasement (50) qui comprend au moins une matrice (51 ; 451, 551) pour recevoir la bague (41 ; 241) et au moins un poinçon d'évasement (152 ; 352 ; 452, 552) susceptible d'être enfoncé axialement dans la bague (41 ; 241) située dans la matrice, la bague (41 ; 241) dans la matrice (51 ; 451, 551) pouvant être évasée par le poinçon d'évasement (152 ; 352 ; 452, 552), **caractérisé en ce que** l'étage d'évasement (50) est réalisé pour effectuer l'évasement de la bague (41) en deux ou en plusieurs étapes.

10. Dispositif selon la revendication 9, **caractérisé en ce que** le poinçon d'évasement (152 ; 352 ; 452, 552) comprend au moins deux portions (152a, 152c, 152e) de différentes dimensions en section transversale et une portion de transition (152b, 152d) respectivement entre deux de ces portions.

11. Dispositif selon la revendication 9 ou 10, **caractérisé en ce que** l'étage d'évasement (50) comprend deux ou plusieurs matrices (451, 551) de différentes dimensions et en correspondance deux ou plusieurs poinçons d'évasement (452, 552) de différentes dimensions.

12. Dispositif selon l'une des revendications 9 à 11, **caractérisé en ce que** ledit au moins un poinçon d'évasement (152 ; 352) est étagé deux ou plusieurs fois.
